# EUROPEAN PATENT APPLICATION

(11) **EP 4 842 006 A1**
(43) Date of publication of application: **18.11.2026**
(21) Application number: 26176462.5
(22) Date of filing: 05.05.2026
(51) Int. Cl.: H04N 23/82, H04N 25/42, H04N 25/773

(54) **PHOTOELECTRIC CONVERSION DEVICE, PHOTOELECTRIC CONVERSION SYSTEM, AND MOVING BODY**

(30) Priority: 15.05.2025 JP 2025082126
(71) Applicant: Canon Kabushiki Kaisha, Tokyo 146-8501 (JP)
(72) Inventor: KAMIKURA, Takahiro, Ohta-ku, Tokyo, 146-8501 (JP)
(74) Representative: TBK

(57) **Abstract**

A photoelectric conversion device includes a pixel array having a plurality of pixels, a readout circuit configured to read out a signal from the pixel array, and a timing controller. The timing controller defines a plurality of sub-frame periods forming each frame period and a plurality of detection periods forming each sub-frame period. Each of the plurality of pixels includes a detector configured to detect a photon, and an integrator configured to, in each of the plurality of sub-frame periods, add, to an integrated value, a weight value according to a detection period in which a photon is detected by the detector among the plurality of detection periods. The timing controller sets the weight value in accordance with a gain by which a processor configured to process a signal output from the readout circuit multiplies the signal.

## Description

### TECHNICAL FIELD

The present disclosure relates to a photoelectric conversion device, a photoelectric conversion system, and a moving body.

### BACKGROUND

There is known a photoelectric conversion device capable of detecting faint light of single photon level using avalanche multiplication. US-2017-0186798 discloses a photoelectric conversion device in which a sensor chip with a plurality of pixels arrayed and a circuit chip on which a circuit for performing signal processing is formed are stacked. In Japanese Patent Laid-Open Nos. 2025-009968 and 2025-009969, a weighting count method operation for weighting and counting a signal detected by an avalanche photodiode is described.

### SUMMARY

The present disclosure provides a technique of performing weighting according to a gain.

The present disclosure in its first aspect provides a photoelectric conversion device as specified in claim 1. Optional features are specified in claim 2 to 13.

The present disclosure in its second aspect provides a photoelectric conversion system as specified in claim 14.

The present disclosure in its third aspect provides a moving body as specified in claim 15.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
Fig. 1 is a view schematically showing an example of the configuration of a photoelectric conversion device according to the embodiment;
Fig. 2 is a view schematically showing the configuration of a first substrate of the photoelectric conversion device according to the embodiment;
Fig. 3 is a view schematically showing the configuration of a second substrate of the photoelectric conversion device according to the embodiment;
Fig. 4 is a view showing an example of the configuration of a pixel according to the embodiment;
Figs. 5A to 5C are views for explaining a photon detection operation;
Figs. 6A to 6C are views for explaining weighting count;
Fig. 7 is a view exemplifying the relationship between a gain and a saturated count value according to the first embodiment;
Fig. 8 is a view showing an example of the configuration of a pixel according to the first embodiment;
Fig. 9 is a timing chart showing an example of the operation of the pixel and a timing controller according to the first embodiment;
Fig. 10 is a graph exemplifying the probability of photon detection with respect to a light amount;
Figs. 11A and 11B are views for explaining the second embodiment;
Fig. 12 is a view for explaining the second embodiment;
Fig. 13 is a view showing a photoelectric conversion system according to the first application example;
Fig. 14 is a view showing a photoelectric conversion system according to the second application example;
Figs. 15A and 15B are views showing a photoelectric conversion system according to the third application example;
Fig. 16 is a view showing a photoelectric conversion system according to the fourth application example;
Fig. 17 is a view showing a photoelectric conversion system according to the fifth application example; and
Figs. 18A and 18B are views showing a photoelectric conversion system according to the sixth application example.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

An embodiment of the present disclosure will now be described in detail with reference to the accompanying drawings. Note that in the following description, terms (for example, "upper", "lower", "right", "left" and other terms including these terms) representing specific directions or positions are used, as necessary. These terms are used for easy understanding of the embodiments with reference to the accompanying drawings, and the meanings of the terms do not limit the technical scope of the present disclosure.

In this specification, a planar view is viewing from a direction perpendicular to the light incident surface of a semiconductor layer. A sectional view indicates a plane in the direction perpendicular to the light incident surface of the semiconductor layer. Note that if the light incident surface of the semiconductor layer is rough microscopically, the planar view is defined with reference to the light incident surface of the semiconductor layer when viewed macroscopically.

In example to be described below, a detector that detects a photon is formed by an avalanche photodiode (APD), a fixed potential is given to the anode of the APD, and a signal is extracted from the cathode side. Hence, a semiconductor region of a first conductivity type containing, as a majority carrier, a charge of the same polarity as that of a signal charge is an n-type semiconductor region, and a semiconductor region of a second conductivity type containing, as a majority carrier, a charge of a polarity different from that of the signal charge is a p-type semiconductor region. Note that a fixed potential may be given to the cathode of the APD, and a signal may be extracted from the anode side. In this case, a semiconductor region of a first conductivity type containing, as a majority carrier, a charge of the same polarity as that of a signal charge is a p-type semiconductor region, and a semiconductor region of a second conductivity type containing, as a majority carrier, a charge of a polarity different from that of the signal charge is an n-type semiconductor region. Hereinafter, a case where one node of the APD is set to a fixed potential will be described, but the potentials of both nodes may vary.

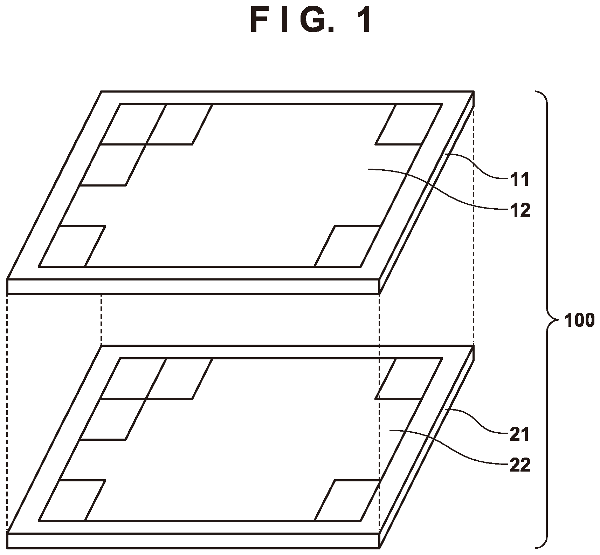

Fig. 1 schematically shows an example of the configuration of a photoelectric conversion device 100 according to an embodiment of the present disclosure. The photoelectric conversion device 100 can have a structure in which, for example, a first substrate 11 and a second substrate 21 are stacked. The first substrate 11 can include, for example, a photoelectric converter array 12 including a plurality of photoelectric converters (APDs). The second substrate 21 can include a processing circuit 22 that processes signals output from the plurality of photoelectric converters.

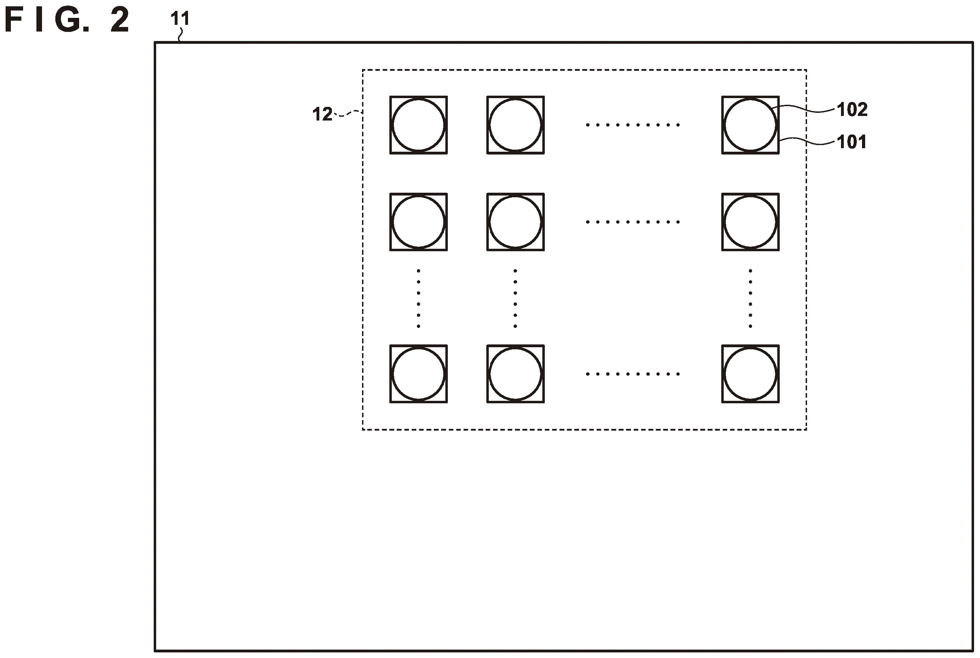

Fig. 2 schematically shows an example of the configuration of the first substrate 11. The photoelectric converter array 12 of the first substrate 11 can include a plurality of photoelectric converters 102 arranged to form a plurality of rows and a plurality of columns. Each photoelectric converter 102 is a constituent element of a detector that detects photons, and is also a constituent element of a pixel 101. In the following explanation, the photoelectric conversion device 100 has an aspect as a part of an image capturing device. However, the photoelectric conversion device 100 may be formed as a part of another device. For example, the photoelectric conversion device 100 can be formed as a distance measuring device (for example, a focus detection device or a distance measuring device using Time Of Flight (TOF)), a photometric device (for example, a device that measures an incident light amount), or the like. Note that the plurality of pixels 101 may be arranged linearly and, in this case, the photoelectric conversion device 100 can form a line sensor.

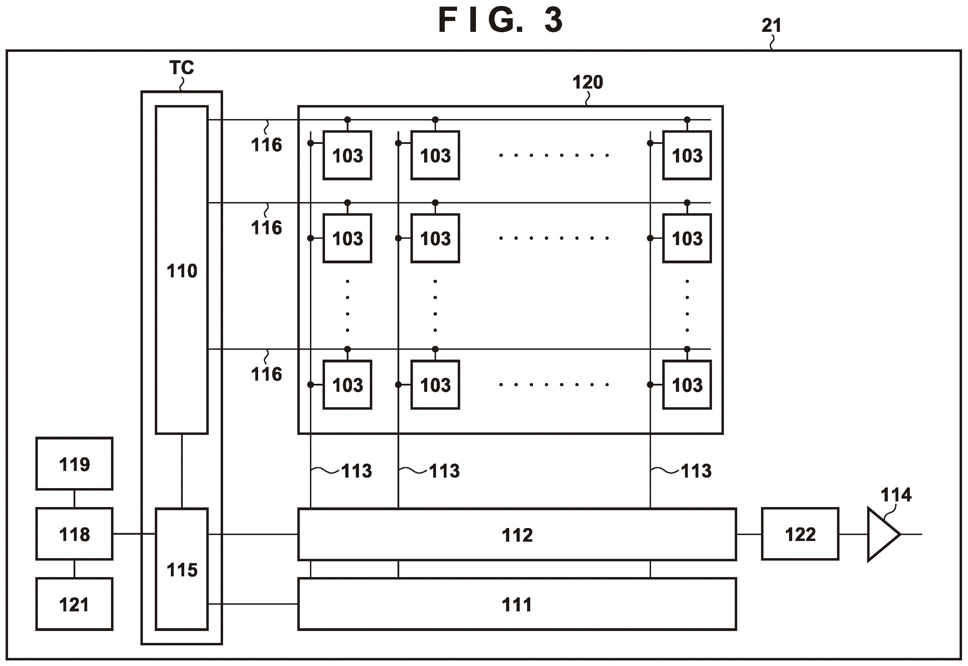

Fig. 3 schematically shows the configuration of the processing circuit 22 of the second substrate 21. The processing circuit 22 can include, for example, a pixel circuit array 120 including a plurality of pixel circuits 103, a readout circuit 112, a controller 115, a horizontal scanning circuit 111, a plurality of signal lines 113, a vertical scanning circuit 110, a processor 122, an output unit 114, a gain setter 118, and the like. Each pixel circuit 103 forms the pixel 101 together with the photoelectric converter 102 corresponding to it, and processes a signal output from the photoelectric converter 102. One pixel circuit 103 may be provided in correspondence with one photoelectric converter 102, or one pixel circuit 103 may be provided in correspondence with two or more photoelectric converters 102. Even in the latter case, it can be considered that each pixel 101 includes the photoelectric converter 102 and the pixel circuit 103. In an example, one photoelectric converter 102 and one pixel circuit 103 can electrically be connected by a connector. The photoelectric converter array 12 and the pixel circuit array 120 form a pixel array.

The gain setter 118 can set a gain (digital gain) in accordance with, for example, an operation by the user or an instruction from a host controller (not shown). The operation of setting the gain can include an operation of receiving information indicating the gain from the host controller or the like and storing it in a memory (for example, a latch circuit, a flip-flop, or an SRAM). The processing circuit 22 may further include a sensitivity setter 119 that sets an ISO sensitivity. The sensitivity setter 119 sets the ISO sensitivity in accordance with, for example, an operation by the user or an instruction from the host controller (not shown). The operation of setting the ISO sensitivity can include an operation of receiving information indicating the ISO sensitivity from the host controller or the like and storing it in a memory (for example, a latch circuit, a flip-flop, or an SRAM).

The vertical scanning circuit 110 can generate a row control signal 116 so as to sequentially select the plurality of rows of the photoelectric converter array 12 in accordance with, for example, a control signal supplied from the controller 115. The vertical scanning circuit 110 and the controller 115 can form a timing controller TC that generates a timing to control the operation of the plurality of pixels 101. The vertical scanning circuit 110 can include, for example, at least one of a shift register and an address decoder. The readout circuit 112 reads out signals from the pixel array in accordance with, for example, a control signal supplied from the controller 115. More specifically, the readout circuit 112 reads out signals output, via the plurality of signal lines 113, from the pixel circuits 103 corresponding to the pixels 101 of a row selected by the vertical scanning circuit 110.

The horizontal scanning circuit 111 can control the readout circuit 112 such that, for example, the signals of one row read out by the readout circuit 112 are output to the processor 122 in a predetermined order. The processor 122 processes a signal output from the readout circuit 112 and supplies the processed signal to the output unit 114. The processor 122 can perform processing of, for example, multiplying the signal output from the readout circuit 112 by the gain set by the gain setter 118. The processor 122 may be provided outside the photoelectric conversion device 100, and the function of the processor 122 may be implemented by a first processor provided inside the photoelectric conversion device 100 and a second processor provided outside the photoelectric conversion device 100. Also, a device incorporating the photoelectric conversion device 100 can be called a photoelectric conversion device.

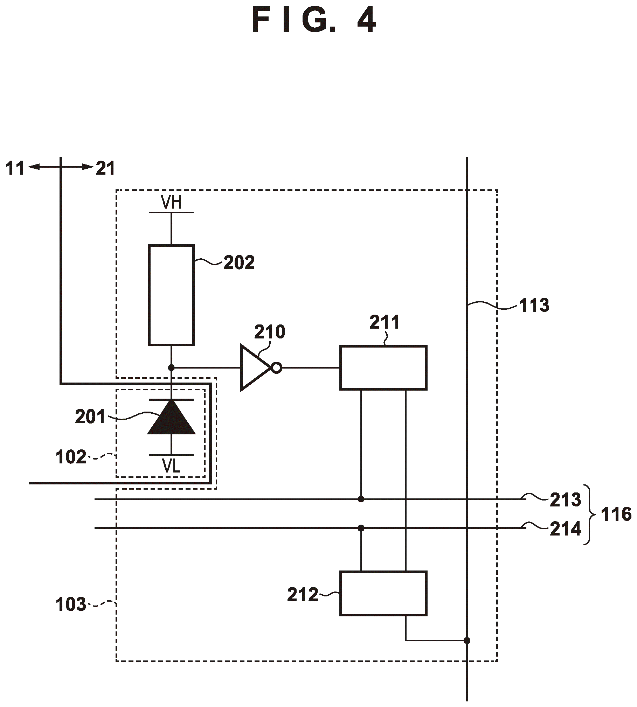

Fig. 4 shows an example of the configuration of one pixel 101 formed by the photoelectric converter 102 and the pixel circuit 103. In the example shown in Fig. 4, one pixel circuit 103 is assigned to one photoelectric converter 102. The photoelectric converter 102 includes an APD 201. At least one of the plurality of constituent elements of the pixel circuit 103 may be arranged on the first substrate 11. Alternatively, all the plurality of constituent elements of the pixel circuit 103 may be arranged on the first substrate 11.

A first voltage VH can be applied to the cathode of the APD 201. A second voltage VL is applied to the anode of the APD 201, and the first voltage VH has a potential higher than the potential of the second voltage VL. The potential difference between the first voltage VH and the second voltage VL is applied to (between the anode and cathode of) the APD 201. The potential difference is a reverse bias voltage that causes the APD 201 to perform an avalanche multiplication operation. Charges generated by photons entering the APD 201 cause avalanche multiplication, thereby generating an avalanche current. A mode of applying a voltage higher than the breakdown voltage of the APD 201 between the anode and the cathode of the APD 201 is called a Geiger mode. A mode of applying a voltage around or lower than the breakdown voltage between the anode and the cathode of the APD 201 is called a linear mode. An APD operating in the Geiger mode is called an SPAD. In an example, the first voltage VH is 1 V, and the second voltage VL is -30 V.

The pixel circuit 103 can include a quenching element 202 connected between the cathode of the APD 201 and a terminal supplied with the first voltage VH. The quenching element 202 may be understood as an element that supplies the first voltage VH to the cathode of the APD 201. The quenching element 202 has a function of converting the change of the avalanche current generated in the APD 201 into a voltage signal. The quenching element 202 functions as a load circuit (quenching circuit) at the time of signal multiplication by avalanche multiplication, and serves to suppress avalanche multiplication by suppressing the voltage applied to the APD 201. This is known as a quenching operation.

The pixel circuit 103 can additionally include, for example, at least one of a waveform shaping circuit 210, a signal processing circuit 211, and a selection circuit 212. The waveform shaping circuit 210 can output a pulse signal by shaping the potential change of the cathode of the APD 201 at the time of detection of a photon. The waveform shaping circuit 210 can include, for example, an inverter circuit. In the example shown in Fig. 4, the waveform shaping circuit 210 is formed by one inverter, but the waveform shaping circuit 210 may be formed by series-connecting a plurality of inverters or by another circuit having the waveform shaping effect.

The signal processing circuit 211 can be configured to generate a count signal indicating the number of incident photons based on a pulse signal output from the waveform shaping circuit 210 and hold a count value. When a first control pulse of active level is supplied from the vertical scanning circuit 110 via a driving line 213, the count signal held in the signal processing circuit 211 can be reset. When a second control pulse of active level is supplied from the vertical scanning circuit 110 via a driving line 214, the selection circuit 212 can electrically connect the signal processing circuit 211 and the signal line 113. The selection circuit 212 can include, for example, a buffer circuit.

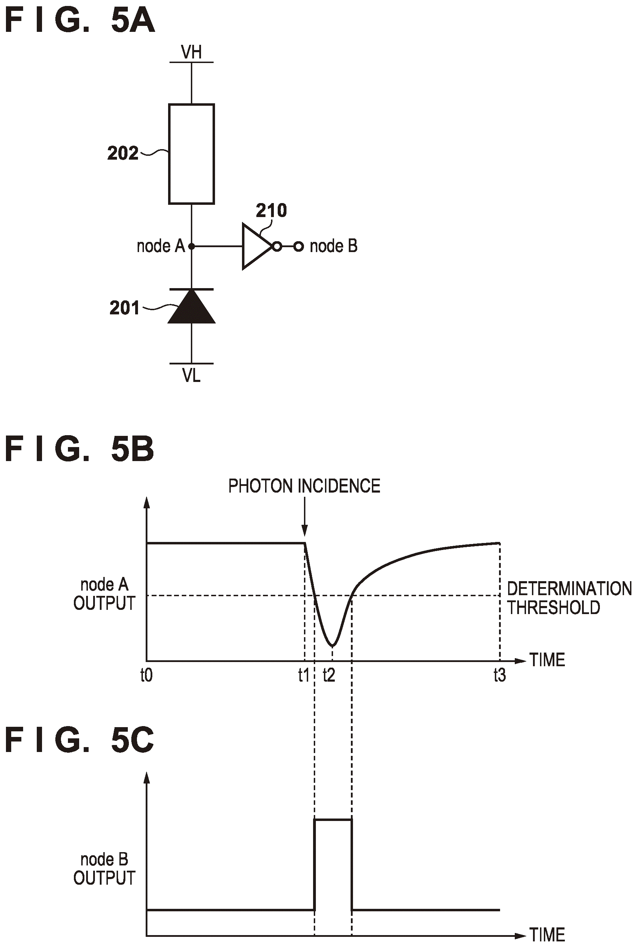

Figs. 5A to 5C are views for explaining a photon detection operation by the photoelectric conversion device 100. Fig. 5A is a view showing an excerpt of the APD 201, the quenching element 202, and the waveform shaping circuit 210 from Fig. 4. The input side of the waveform shaping circuit 210 is a node A and the output side is a node B. Fig. 5B shows the waveform at the node A in Fig. 5A, and Fig. 5C shows the waveform at the node B in Fig. 5A. From time t0 to time t1, the potential difference between VH and VL is applied to the APD 201. When a photon enters at time t1, avalanche multiplication occurs in the APD 201. This causes an avalanche multiplication current to flow into the quenching element 202, and the voltage (potential) of the node A drops. When the voltage drop amount increases and the potential difference applied to the APD 201 decreases, the avalanche multiplication of the APD 201 stops. After that, a current compensating for the voltage drop from the second voltage VL flows into the node A, and the node A settles at the original potential level at time t3. At this time, a portion at which the output waveform exceeds a given threshold at the node A is waveform-shaped by the waveform shaping circuit 210 and a pulse signal appears at the node B.

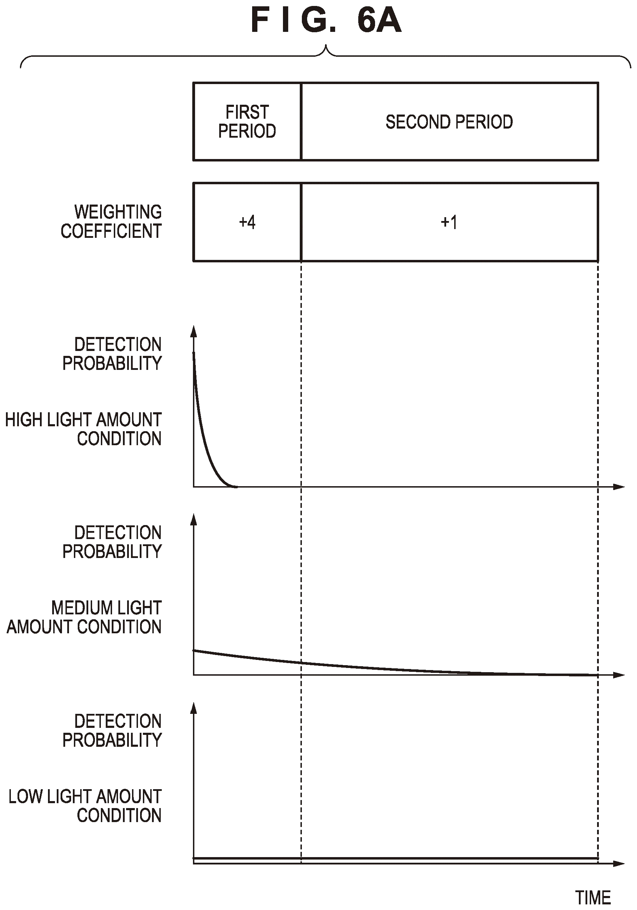

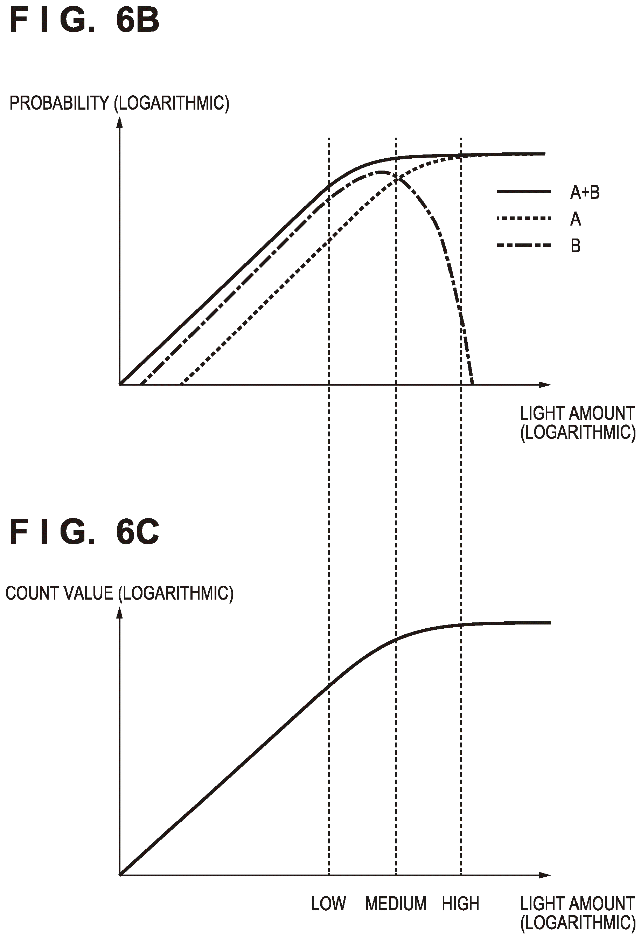

The principle of weighting count according to the present disclosure will be described with reference to Figs. 6A to 6C. Here, Fig. 6A is a view showing an example of the change of the detection probability of a first photon with respect to time and a weighting coefficient in each period under each light amount condition. Fig. 6B is a graph showing the probability of photon detection with respect to the light amount. Fig. 6C is a graph showing the count number of photon detection signals with respect to the light amount. Here, a photon detected for the first time in each sub-frame period in which a count operation is performed is called a first photon. Note that in this specification, the light amount means an amount of light that enters (the pixel 101 of) the photoelectric conversion device 100 during a unit time.

As shown in Fig. 6A, under a high light amount condition, the probability of detecting the first photon is higher in an early part of the sub-frame period and lowers along with the elapse of time. If the sub-frame period is divided into a first period and a second period after the first period, under the high light amount condition, the probability of detecting the first photon is high during the first period. Under a medium light amount condition as well, the photon detection probability lowers along with the elapse of time. However, as compared to a case of high light amount, the time dependency of the detection probability of the first photon is low, and the first photon may be detected even during the second period. Under a low light amount condition, the detection probability of the first photon hardly depends on time.

In Fig. 6B, a broken line A indicates the probability of detecting the first photon during the first period in each light amount, and a broken line B indicates the probability of detecting the first photon during the second period in each light amount. A solid line (A + B) that is the sum of the broken line A and the broken line B indicates the probability of detecting the first photon during the detection period in each light amount. As indicated by the broken line A, the larger the light amount is, the higher the probability of detecting the first photon during the first period is, and the probability saturates under the high light amount condition. Particularly, under the low to medium light amount conditions, the probability of detecting the first photon during the first period increases as a power with respect to the increase of the light amount. On the other hand, as indicated by the broken line B, under the low to medium light amount conditions, the larger the light amount is, the higher the probability of detecting the first photon during the second period is, and the probability lowers under the medium to high light amount condition. This is because under the high light amount condition, the first photon is detected during the first period in many cases but it is a photon entering after the first photon that is detected in the second period. As for the probability of detecting the first photon in each light amount, as indicated by the solid line (A + B) that is the sum of the broken line A and the broken line B, under the low to medium light amount conditions, the larger the light amount is, the higher the photon detection probability is, and the probability converges to a predetermined value under the medium to high light amount conditions.

Fig. 6C shows a graph of the count value in each light amount. At a similar detection probability of the first photon shown in Fig. 6B, the second and subsequent photons enter the APD. That is, under the low to medium light amount conditions, the larger the light amount is, the larger the count number of photons is. Under the medium to high light amount conditions, the count value saturates along with the increase of the light amount. The saturation value of the count value is called a saturated count value. Under the high light amount condition, the increase amount of the count value and the increase amount of the number of incident photons are not in a one-to-one correspondence, and it can be said that the weight of the count value per count increases. In other words, it can be said that under the low to medium light amount conditions, the expected value of the number of detected photons depends on the light amount, but under the medium to high light amount conditions, the weight of the count value depends on the light amount.

In the embodiment to be described below, a count operation is executed while changing the weighting coefficient (weight value) in accordance with the timing of detecting a photon. In this embodiment, each frame period is divided into a plurality of sub-frame periods, and each sub-frame period is further divided into a plurality of detection periods. Each sub-frame period is also called a recharge period. One frame is one still image, and one frame period is a period to acquire one still image. For example, when still images of 30 frames are continuously reproduced, a moving image of one minute is generated. By setting the weighting coefficient (weight value) in accordance with the timing of detecting a photon, improvement of Signal Noise Ratio (SNR) and expansion of the dynamic range can simultaneously be implemented.

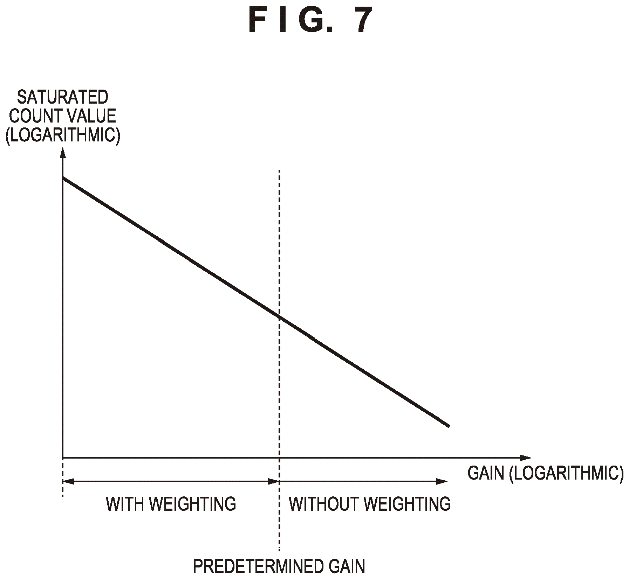

Fig. 7 exemplifies the relationship between the gain by which the processor 122 configured to process the signal output from the readout circuit 112 multiplies the signal and the saturated count value. When capturing an image of a subject with a low illuminance, the processor 122 multiplies the signal output from the pixel array by a gain (digital gain) larger than 1, thereby obtaining an image in an appropriate exposure state. In general, the processor 122 can be designed based on a saturated count value in the best SNR state as a reference. When capturing an image of a subject with an illuminance lower than the illuminance corresponding to the saturated count value as the reference, the processor 122 can multiply the signal output from the readout circuit 112 by a gain larger than 1. For this reason, as exemplified in Fig. 7, the saturated count value and the gain can have an inversely proportional relationship.

Making an explanation based on the example shown in Figs. 6A to 6C, under a high light amount condition, the gain of the processor 122 is set to a low gain, and under a low light amount condition, the gain of the processor 122 is set to a high gain. It can therefore be said that, under the high light amount condition, that is, when a low gain is set, the weighting coefficient (weight value) depends on the light amount of the subject, and under the low light amount condition, that is, when a high gain is set, the count value of a photon that is not weighted depends on the light amount of the subject. Hence, if a low light amount condition, that is, a high gain is set, it can be said that the SNR lowers when weighting is performed.

The timing controller TC can set or decide the weighting coefficient (weight value) in accordance with the gain set by the gain setter 118. In other words, the timing controller TC can set or decide the weighting coefficient (weight value) in accordance with the gain by which the processor 122 configured to process the signal output from the readout circuit 112 multiplies the signal. Here, setting the weighting coefficient (weight value) to 1 means that weighting is not performed. The setting of the weighting coefficient (weight value) according to the gain can be performed to suppress lowering of the SNR caused by the weighting.

In this embodiment, as exemplified in Fig. 7, if the gain set by the gain setter 118 is larger than a predetermined gain (threshold), the timing controller TC does not perform weighting (that is, sets the weighting coefficient (weight value) to 1). This suppresses lowering of the SNR caused by weighting. On the other hand, if the gain set by the gain setter 118 is smaller than the predetermined gain (threshold), the timing controller TC performs weighting (that is, sets the weighting coefficient (weight value) to a value larger than 1). The predetermined gain can be decided in accordance with required specifications. The photoelectric conversion device 100 may include a programming unit 121 that programs (sets) the predetermined gain (threshold) in accordance with an instruction from the user or the like.

Note that the predetermined gain (threshold) can be a value that is never set by the gain setter 118 (for example, if gains settable by the gain setter 118 are 2, 4, 8, 16, 32,..., the predetermined gain is set to 20). Alternatively, the predetermined gain (threshold) may be a value that may be set by the gain setter 118. In the latter case, the timing controller TC may be configured to perform weighting if the gain set by the gain setter 118 equals the predetermined gain (threshold), or may be configured not to perform weighting.

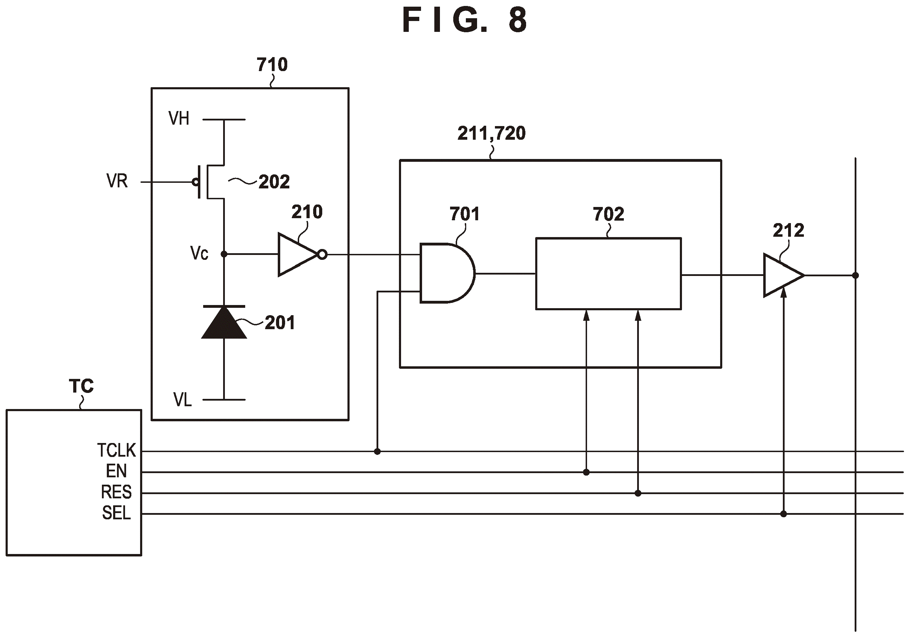

Fig. 8 shows an example of the configuration of one pixel 101 according to the first embodiment. In the example shown in Fig. 8, a quenching element 202 is formed by a PMOS transistor, and a waveform shaping circuit 210 is formed by an inverter. An APD 201, the quenching element 202, and the waveform shaping circuit 210 can form a detector 710 that detects a photon. The signal processing circuit 211 can form an integrator 720 that adds, to an integrated value, a weight value according to a detection period in which a photon is detected by the detector 710 among a plurality of detection periods in each of a plurality of sub-frame periods that form each frame period. The integrator 720 can include a counter 702 and a counter controller 701 that controls the counter 702. The counter controller 701 can be formed by, for example, an AND circuit. The output signal from the waveform shaping circuit 210 is input to one of the two input terminals of the AND circuit that forms the counter controller 701, and a clock signal TCLK can be input to the other input terminal.

In addition to the clock signal TCLK, an enable signal EN, a reset signal RES, and a selection signal SEL can be supplied from a vertical scanning circuit 110 to the pixel 101. The clock signal TCLK, the enable signal EN, and the reset signal RES may be supplied from a controller 115. The vertical scanning circuit 110 and the controller 115 can form the timing controller TC that generates a timing to control the operation of the plurality of pixels 101. The timing controller TC may drive the plurality of pixels 101 by a global shutter method, or may drive the plurality of pixels 101 by a rolling shutter method. In the global shutter method, the exposure period to detect a photon is common to the plurality of pixels 101, and in the rolling shutter method, the exposure period to measure the number of photons entering each pixel 101 changes between rows.

The timing controller TC can make each of the clock signal TCLK, the enable signal EN, the reset signal RES, and the selection signal SEL transition at a timing according to the gain set by the gain setter 118. Also, the timing controller TC can set or decide a weight value according to a detection period in which a photon is detected among a plurality of detection periods in accordance with the gain set by the gain setter 118.

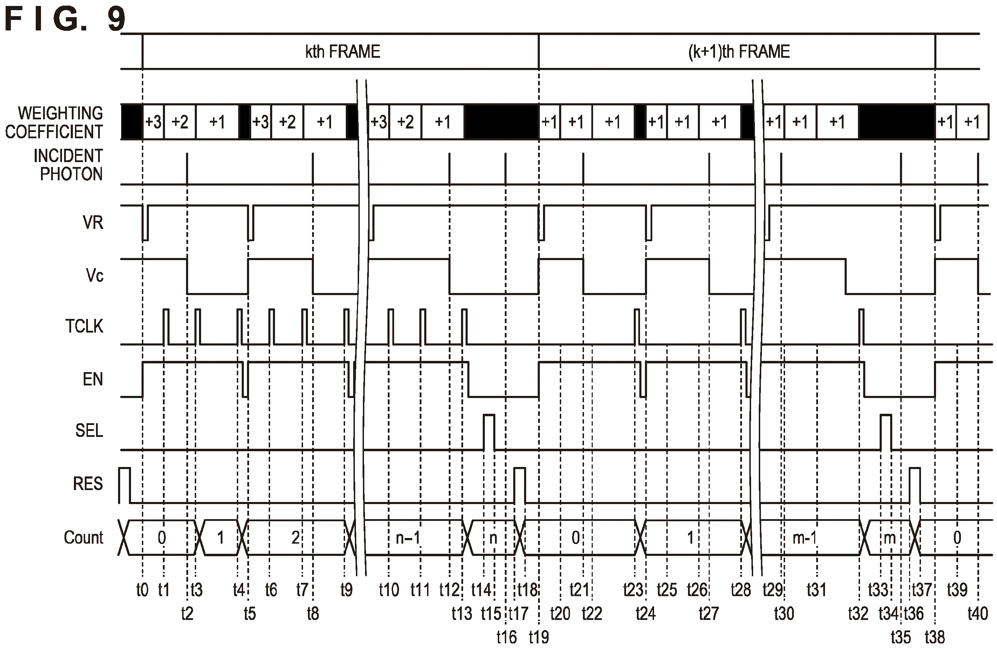

Fig. 9 shows an example of the operation of the pixel 101 and the timing controller TC according to the first embodiment. In the example shown in Fig. 9, in the kth frame, a gain smaller than the predetermined gain (threshold) shown in Fig. 7 is set by the gain setter 118, and in the (k+1)th frame, a gain larger than the predetermined gain (threshold) shown in Fig. 7 is set by the gain setter 118. Hence, (the maximum of) the weighting coefficient (weight value) set by the timing controller TC for the kth frame and (the maximum of) the weighting coefficient (weight value) set by the timing controller TC for the (k+1)th frame are different. More specifically, the maximum of the weighting coefficient (weight value) set by the timing controller TC for the kth frame is 3, and the maximum of the weighting coefficient (weight value) set by the timing controller TC for the (k+1)th frame is 1. Here, that the maximum value of the weighting coefficient (weight value) is 1 means that weighting is not performed.

Hereinafter, that the logic level of a signal is low level is expressed as L, and that the logic level of a signal is high level is expressed as H. As described above, each frame period includes a plurality of sub-frame periods (recharge periods). In Fig. 9, for example, the period from time t0 to time t5 is one sub-frame period (recharge period). The timing controller TC defines, by the clock signal TCLK, a plurality of detection periods (in the example of Fig. 9, three detection periods) forming each sub-frame period. The clock signal TCLK has an aspect of a signal including a plurality of pulse signals that define a plurality of detection periods, and the intervals between the plurality of pulse signals can be non-equal intervals in each sub-frame and can, for example, monotonically decrease. The first detection period is a period in which the weighting coefficient is expressed as "+3", the second detection period is a period in which the weighting coefficient is expressed as "+2", and the third detection period is a period in which the weighting coefficient is expressed as "+1". The clock signal TCLK is also a signal that causes the counter 702 to perform a count operation in a period in which a voltage Vc of the output node of the APD 201 is at L (a period in which the output of the waveform shaping circuit 210 is at H).

If a photon is detected by the detector 710 in the first detection period ("+3"), Vc changes to L (the output of the waveform shaping circuit 210 changes to H) and, after that, the clock signal TCLK changes to H three times. In response to this, the counter 702 performs the count operation three times, and a value "3" according to the first detection period is thus added to an integrated value (0 immediately after reset by the reset signal RES) that is a count value Count of the integrator 720. If a photon is detected by the detector 710 in the second detection period ("+2"), Vc changes to L (the output of the waveform shaping circuit 210 changes to H) and, after that, the clock signal TCLK changes to H twice. In response to this, the counter 702 performs the count operation twice, and a value "2" according to the second detection period is thus added to the integrated value that is the count value Count of the integrator 720. If a photon is detected by the detector 710 in the third detection period ("+1"), Vc changes to L (the output of the waveform shaping circuit 210 changes to H) and, after that, the clock signal TCLK changes to H only once. In response to this, the counter 702 performs the count operation only once, and a value "1" according to the third detection period is thus added to the integrated value that is the count value Count of the integrator 720. As described above, the method of adding, to the integrated value, a weight value according to the detection period in which a photon is detected by the detector 710 among a plurality of detection periods in each sub-frame period is called weighted addition.

The operation of the kth frame starting from time t0 will exemplarily be described below. As described above, in the kth frame, a gain smaller than the predetermined gain (threshold) shown in Fig. 7 is set by the gain setter 118. According to this, the timing controller TC sets the maximum value of the weighting coefficient (weight value) to 3. The timing at which a photon enters is exemplified as "incident photon", and the operation exemplified in Fig. 9 depends on the timing at which a photon enters. At time t0, the logic level of the enable signal EN transitions from L to H. Thus, the exposure period in the kth frame period starts. Also, at time t0, the logic level of a clock signal VR changes to L and then immediately returns to H. Thus, the quenching element 202 is turned on and Vc is reset (recharged). At time t1, the logic level of the clock signal TCLK changes to H. The clock signal TCLK is a signal that defines the timing to change the weighting coefficient (in other words, the detection period) and is also a signal that causes the counter 702 to perform the count operation in the period in which Vc is at L (the period in which the output of the waveform shaping circuit 210 is at H).

At time t1, since Vc is at H (the output of the waveform shaping circuit 210 is at L), even if the clock signal TCLK change to H, the counter 702 does not perform the count operation. At time t2, a photon enters the APD 201. Thus, the logic level of the output signal Vc changes to L, and the logic level of the output of the waveform shaping circuit 210 changes to H. At time t3, if the level of the clock signal TCLK changes to H, the logic level of the output of the AND circuit serving as the counter controller 701 changes to H. Hence, the counter 702 performs the count operation, and 1 is added to the integrated value that is the count value Count. At time t4, the level of the clock signal TCLK changes to H again, and the logic level of the output of the AND circuit serving as the counter controller 701 thus changes to H. Hence, the counter 702 performs the count operation, and 1 is added to the integrated value that is the count value Count. That is, 2 is added as the weight value to the integrated value that is the count value Count in the period from time t1 to time t4. In other words, 2 is added as the weight value to the integrated value that is the count value Count in one sub-frame period starting at time t0.

In the period from time t4 to time t5, the logic level of the enable signal EN changes to L. The counter 702 is thus controlled to a disable state. A photon that enters the APD 201 during this period is not detected. The period from time t1 to time t5 is one sub-frame period, and a new sub-frame period starts from time t5.

In the sub-frame period starting from time t5, the level of the clock signal TCLK changes to H at times t6 and t7, but since Vc is at H (the output from the waveform shaping circuit 210 is at L), the counter 702 does not perform the count operation. A photon enters the APD 201 at time t8, in response to this, the level of the output signal Vc changes to L, and the logic level of the output of the waveform shaping circuit 210 changes to H. At time t9, the level of the clock signal TCLK changes to H, the counter 702 performs the count operation, 1 is added to the integrated value that is the count value Count. That is, in the period from time t5 to time t9, 1 is added to the integrated value that is the count value Count.

In the period from time t14 to time t15, the selection signal SEL changes to H. Thus, a selection circuit 212 outputs an integrated value held in the signal processing circuit 211 to the signal line 113. At time t16, a photon enters the APD 201, but since the logic level of the enable signal EN is L, a signal based on the photon is not counted. In the period from time t17 to time t18, the level of the reset signal RES changes to H, and the signal held in the signal processing circuit 211 is reset.

At time t19, the enable signal EN transitions from L to H, and the exposure period (and the first sub-frame period) in the (k+1)th frame start. As described above, in the (k+1)th frame, a gain larger than the predetermined gain (threshold) shown in Fig. 7 is set by the gain setter 118. According to this, the timing controller TC sets the maximum value of the weighting coefficient (weight value) to 1. This means that weighting is not performed. At times t20 and t22 in the (k+1)th frame, which correspond to times t1 and t3 in the kth frame, the clock signal TCLK does not change to H. Hence, even at time t22 at which the level of the output signal Vc is at L, the counter 702 does not perform the count operation.

At time t23, if the level of the clock signal TCLK changes to H, the logic level of the output from the AND circuit serving as the counter controller 701 changes to H and, therefore, the counter 702 performs the count operation, and 1 is added to the integrated value that is the count value Count. In the period from time t23 to time t24, the logic level of the enable signal EN changes to L. The counter 702 is thus controlled to a disable state. A photon that enters the APD 201 during this period is not detected. The period from time t19 to time t24 is one sub-frame period, and in the sub-frame period starting from time t19, weighting is performed, and count is performed.

A new sub-frame period starts from time t24. In the sub-frame period starting from the time t24, a photon enters the APD 201 at time t27, in response to this, the level of the output signal Vc changes to L, and the logic level of the output of the waveform shaping circuit 210 changes to H. At time t28, the level of the clock signal TCLK changes to H, the counter 702 performs the count operation, and 1 is added to the integrated value that is the count value Count. That is, in the period from time t24 to time t28, 1 is added to the integrated value that is the count value Count. In the sub-frame period starting from time t24, weighting is performed, and count is performed.

In the period from time t33 to time t34, the selection signal SEL changes to H. Thus, a selection circuit 212 outputs an integrated value held in the signal processing circuit 211 to the signal line 113. At time t35, a photon enters the APD 201, but since the logic level of the enable signal EN is L, a signal based on the photon is not counted. In the period from time t36 to time t37, the level of the reset signal RES changes to H, and the signal held in the signal processing circuit 211 is reset.

At time t38, the enable signal EN transitions from L to H, and the exposure period in the (k+2)th frame period starts.

In the above-described configuration, the clock signal TCLK generated by the timing controller TC is changed in accordance with the gain set by the gain setter 118. However, for example, an AND circuit may be added to the pixel 101. Then, the clock signal TCLK may be generated by calculating, by the AND circuit, the AND of a mask signal generated by the timing controller TC in accordance with the gain set by the gain setter 118 and a clock signal generated independently of the gain. Alternatively, the signal supplied to the counter 702 may be masked by a mask signal generated by the timing controller TC in accordance with the gain set by the gain setter 118, or another configuration may be employed.

The integrator 720 adds, to the integrated value (count value), a weight value according to the detection period in which a photon is detected by the detector among a plurality of detection periods in each of a plurality of sub-frame periods. In the above-described example, the addition of the weight value according to the detection period in which a photon is detected by the detector among the plurality of detection periods is given by the number of clock signals TCLK that are pulse signals. However, instead of this, for example, the weight value according to the detection period in which a photon is detected by the detector among the plurality of detection periods may be given from the timing controller TC to the integrator 720, and the integrator 720 may add the weight value to the integrated value. The number of detection periods forming each sub-frame is not limited to 3, and can be an arbitrary number of 2 or more. The weight value according to the detection period in which a photon is detected by the detector among the plurality of detection periods may be an arbitrary value.

The gain setter 118 may set a gain in accordance with the ISO sensitivity set by the sensitivity setter 119. Here, the necessary saturated count value becomes small as the ISO sensitivity becomes higher. For this reason, the higher the ISO sensitivity is, the larger the gain that can be set.

In the above-described example, the timing controller TC performs weighting if the gain set by the gain setter 118 is smaller than a predetermined gain (threshold) and does not perform weighting if the gain set by the gain setter 118 is larger than the predetermined gain. However, depending on the value of the predetermined gain, the timing controller TC may not perform weighting if the gain set by the gain setter 118 is smaller than the predetermined gain and may perform weighting if the gain set by the gain setter 118 is larger than the predetermined gain. Also, when performing weighting, the timing controller TC may change (the maximum value of) the weighting coefficient (weight value) in accordance with the gain.

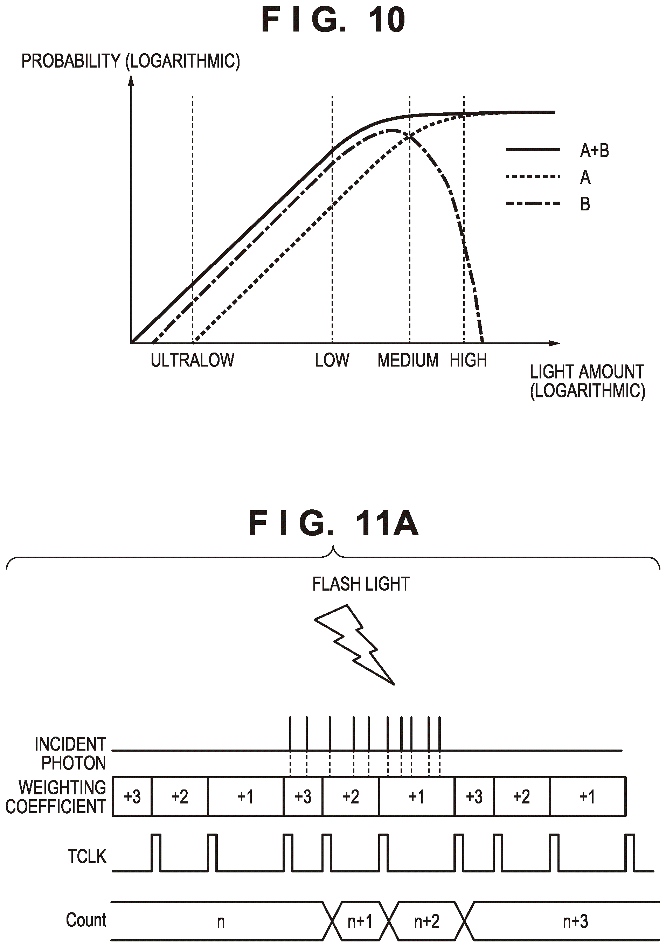

The second embodiment that is a modification of the first embodiment will be described below. Matters that are not mentioned as the description of the second embodiment can comply with the first embodiment. Fig. 10 is a view in which an ultralow light amount condition with a light amount smaller than in the low light amount condition is added to Fig. 6B. Under a light amount condition equal to or less than the ultralow light amount condition, the probability of detecting the first photon in the first period indicated by a broken line A is so low that it can substantially be ignored. For this reason, even if the count operation is executed while performing weighting, the probability of photon entering a period in which a weight larger than 1 is applied is very low, and there is almost no difference between the SNR in a case where weighting is performed and the SNR in a case where weighting is not performed.

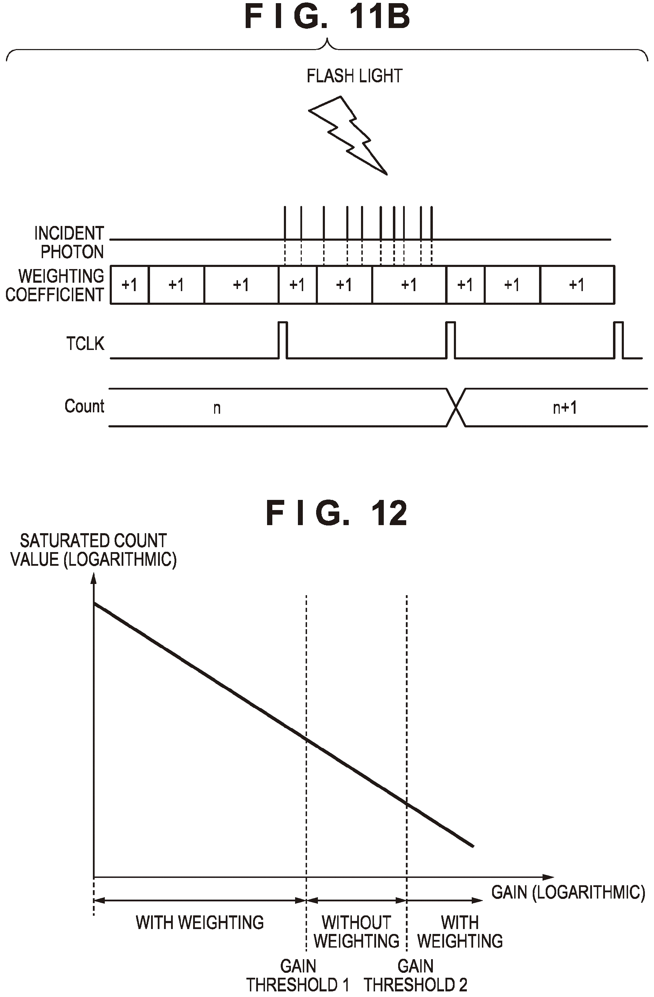

On the other hand, even under the low light amount condition, there is possibility that flash light enters a photoelectric conversion device 100, and a situation as exemplified in Figs. 11A and 11B may occur. Fig. 11A exemplifies a change of a count value (Count) in a case where weighting is performed. Flash light is instantaneous but has a large light amount, and a photon enters during the first detection period at high possibility. For this reason, possibility that count is performed with the largest weight value is high. Fig. 11B exemplifies a change of the count value (Count) in a case where weighting is not performed. In the example shown in Fig. 11B, although photons enter in the first detection period, like the example shown in Fig. 11A, these are counted as only one photon because weighting is not performed. Hence, it can be said that if flash light enters under the low light amount condition, a substantially correct light amount count value can be obtained by performing count while performing weighting.

In the second embodiment, an example in which detection accuracy to flash light that may occur under an ultralow light amount is improved while suppressing lowering of SNR in accordance with a gain set by a gain setter 118 will be described.

Fig. 12 exemplifies the relationship between the gain by which a processor 122 configured to process a signal output from a readout circuit 112 multiplies the signal and a saturated count value and gain thresholds 1 and 2. In the second embodiment, gain threshold 1 (first threshold) and gain threshold 2 (second threshold) are provided. Here, gain threshold 2 is larger than gain threshold 1. The photoelectric conversion device 100 may include a programming unit 121 that programs (sets) gain threshold 1 (first threshold) and gain threshold 2 (second threshold) in accordance with an instruction from the user or the like.

If the gain set by the gain setter 118 is smaller than the first threshold and the gain is larger than the second threshold, a timing controller TC performs weighting (that is, sets the weighting coefficient (weight value) to a value larger than 1). On the other hand, if the gain set by the gain setter 118 is larger than gain threshold 1 and smaller than gain threshold 2, the timing controller TC does not perform weighting (that is, sets the weighting coefficient (weight value) to 1). Note that gain thresholds 1 and 2 can be values that are never set by the gain setter 118. Alternatively, gain thresholds 1 and 2 may be values that may be set by the gain setter 118. In the latter case, the timing controller TC may be configured to perform weighting if the gain set by the gain setter 118 equals gain threshold 1 or 2, or may be configured not to perform weighting. Also, when performing weighting, the timing controller TC may change (the maximum value of) the weighting coefficient (weight value) between a case where the gain set by the gain setter 118 is smaller than the first threshold and a case where the gain is larger than the second threshold.

A pixel 101 of the photoelectric conversion device 100 according to the second embodiment can have the same configuration as the pixel 101 shown in Fig. 8. The photoelectric conversion device 100 according to the second embodiment can operate as exemplified in Fig. 9. Here, in Fig. 9, the kth frame indicates a case where the gain is smaller than gain threshold 1 or larger than gain threshold 2, and the (k+1)th frame indicates a case where the gain is larger than gain threshold 1 and smaller than gain threshold 2.

Several application examples of the above-described photoelectric conversion device 100 will be described below.

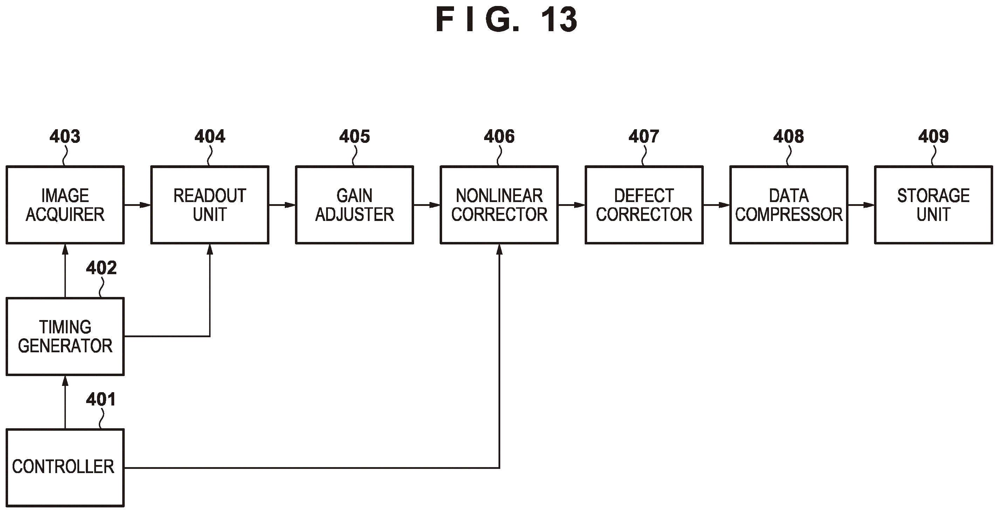

Fig. 13 is a block diagram showing the schematic configuration of a photoelectric conversion system according to the first application example. The photoelectric conversion device 100 is incorporated in the photoelectric conversion system according to the first application example. The photoelectric conversion system according to the first application example can include, for example, a controller 401, a timing generator 402, an image acquirer 403, a readout unit 404, a gain adjuster 405, a nonlinear corrector 406, a defect corrector 407, a data compressor 408, and a storage unit 409. The gain adjuster 405, the nonlinear corrector 406, the defect corrector 407, the data compressor 408, and the storage unit 409 can form the processor 122.

The image acquirer 403 is, for example, a pixel array in which a plurality of pixels 101 are arrayed, and the readout unit 404 is, for example, the readout circuit 112. The timing generator 402 is, for example, the timing controller TC. The controller 401 may be arranged inside the photoelectric conversion device 100 or may be arranged outside. The image acquirer 403 is controlled by the timing generator 402 controlled by the controller 401. Image data generated by the image acquirer 403 undergoes correction processing and is then input to the storage unit 409. Note that the order of correction processing is not limited to the order shown in Fig. 13.

The gain adjuster 405 is provided between, for example, the readout unit 404 and the nonlinear corrector 406, and the gain adjuster 405, for example, multiplies the image data generated by the image acquirer 403 by a digital gain. Data for image correction often has a fractional value, but if the image output is an integer value, the correction accuracy may lower due to a quantization error. When image data is multiplied by a gain in advance, the influence of a quantization error can be suppressed, and the correction accuracy can be improved. Here, if the quantization error can be suppressed to 1/4 times or less a single photon signal level, the image after correction is visually natural. For this reason, the digital gain to multiply image data is preferably, for example, 4 times or more.

The nonlinear corrector 406 can be arranged between, for example, the gain adjuster 405 and the defect corrector 407. The nonlinear corrector 406 can correct image data under the control of, for example, the controller 401. As described in the above embodiments, if the image acquirer 403 is a photon counting type detector, a light response is often nonlinear due to the influence of dead time. If correction assuming a linear response is performed under the influence of a nonlinear light response, it may be excessive correction. Hence, when nonlinear correction is performed for image data at the preceding stage of arithmetic processing in the defect corrector 407, excessive correction can be prevented, and appropriate nonlinear correction according to the drive timing can be executed. The nonlinear correction can be performed using, for example, a lookup table.

The defect corrector 407 corrects the data of a defective pixel included in image data. The defect corrector 407 may, for example, extract the output value of a defective pixel, specify the position information and output value of the defective pixel, and replace the value with the average value or median of the outputs of pixels around the specified defective pixel, or estimated defective image data may be divided, or the correction may be performed by another method. The data compressor 408 compresses corrected image data. In the photoelectric conversion system according to the first application example, an enormous amount of image data corresponding to a high dynamic range can be generated. Hence, the data is preferably compressed before it is stored in the storage unit 409 of the subsequent stage by providing the data compressor 408. The storage unit 409 can hold at least a part of the image data generated at the preceding stage. The storage unit 409 can include at least one of, for example, an SRAM, a DRAM, and a nonvolatile memory.

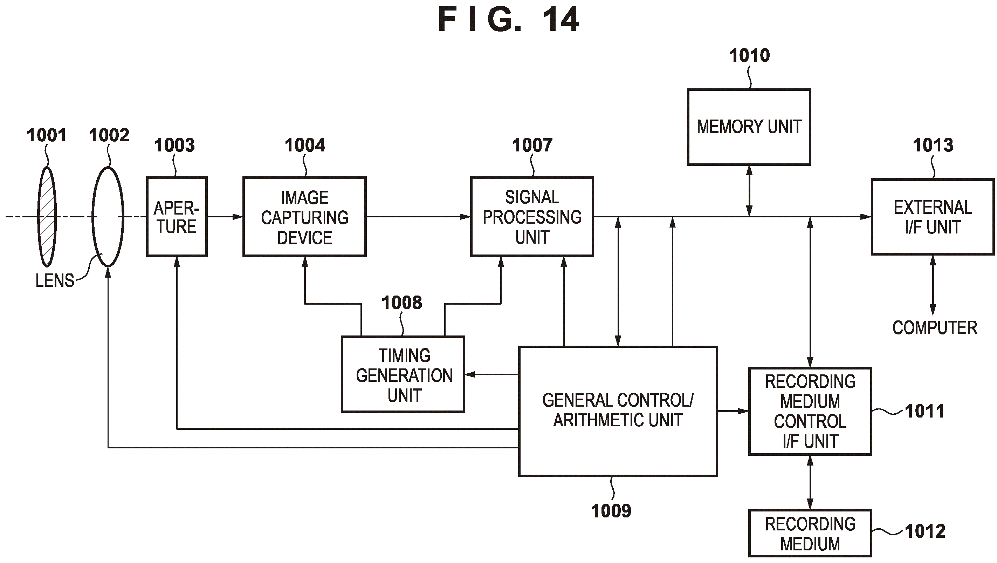

A photoelectric conversion system according to the second application example will be described with reference to Fig. 14. The photoelectric conversion device 100 can be applied to various photoelectric conversion systems. Examples of the photoelectric conversion system are a digital still camera, a digital camcorder, a surveillance camera, a copying machine, a facsimile apparatus, a mobile phone, an in-vehicle camera, and an observation satellite. A camera module including an optical system such as a lens and an image capturing device is also included in the photoelectric conversion system. As an example of these, Fig. 14 exemplifies the block diagram of a digital still camera.

The photoelectric conversion system exemplified in Fig. 14 includes an image capturing device 1004 that is an example of the photoelectric conversion device 100, and a lens 1002 that forms an optical image of a subject on the image capturing device 1004. The photoelectric conversion system further includes a stop 1003 capable of changing the amount of light that passes through the lens 1002, and a barrier 1001 for protecting the lens 1002. The lens 1002 and the stop 1003 form an optical system that condenses light to the image capturing device 1004. The image capturing device 1004 converts the optical image formed by the lens 1002 into an electrical signal.

The photoelectric conversion system includes a signal processor 1007 that is an image generator configured to generate an image by processing an output signal output from the image capturing device 1004. The signal processor 1007 performs an operation of performing various kinds of correction or compression as needed and outputting image data. The signal processor 1007 may be formed in a semiconductor layer provided with the image capturing device 1004, or may be formed in a semiconductor layer different from that of the image capturing device 1004. Also, the image capturing device 1004 and the signal processor 1007 may be formed in the same semiconductor layer.

The photoelectric conversion system further includes a memory unit 1010 configured to temporarily store image data, and an external interface unit (external I/F unit) 1013 configured to communicate with an external computer or the like. Also, the photoelectric conversion system includes a recording medium 1012 such as a semiconductor memory configured to record or read out image capturing data, and a recording medium control interface unit (recording medium control I/F unit) 1011 configured to perform recording in or readout from the recording medium 1012. Note that the recording medium 1012 may be incorporated in the photoelectric conversion system or may be detachable.

The photoelectric conversion system further includes a general control/arithmetic unit 1009 that controls various kinds of arithmetic processing and the whole digital still camera, and a timing generator 1008 that outputs various kinds of timing signals to the image capturing device 1004 and the signal processor 1007. Here, the timing signals and the like may be input from the outside, and it suffices that the photoelectric conversion system includes at least the image capturing device 1004 and the signal processor 1007 that processes the output signal output from the image capturing device 1004.

The image capturing device 1004 outputs an image capturing signal to the signal processor 1007. The signal processor 1007 executes predetermined signal processing for the image capturing signal output from the image capturing device 1004 and outputs image data. The signal processor 1007 generates an image using the image capturing signal.

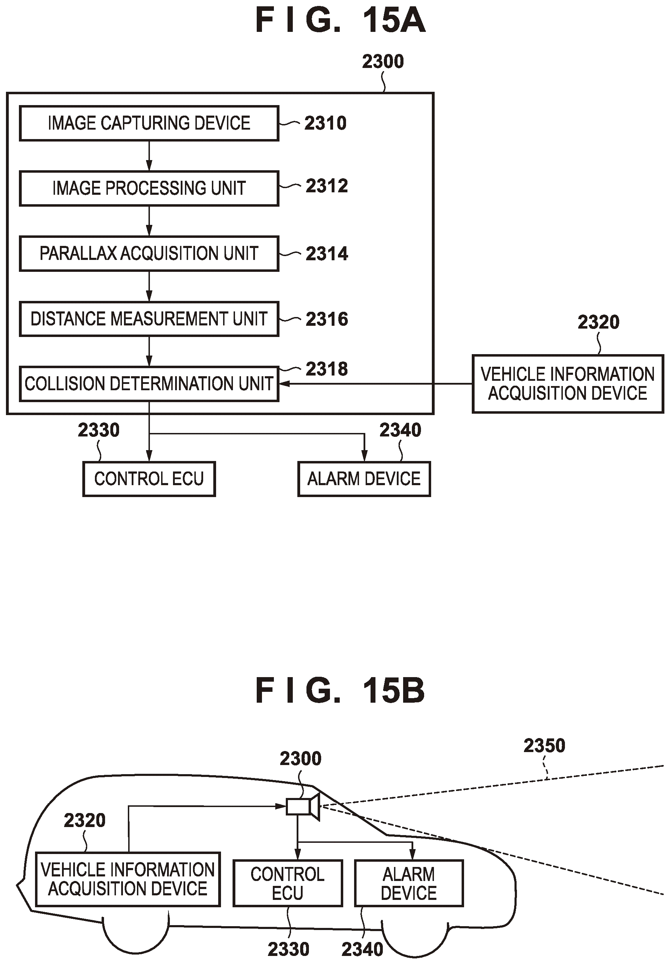

A photoelectric conversion system and a moving body according to the third application example will be described with reference to Figs. 15A and 15B. Fig. 15A shows an example of a photoelectric conversion system 2300 concerning an in-vehicle camera. The photoelectric conversion system 2300 includes an image capturing device 2310. The image capturing device 2310 is the photoelectric conversion device 100 described in any one of the above-described embodiments. The photoelectric conversion system 2300 includes an image processor 2312 that performs image processing for a plurality of image data acquired by the image capturing device 2310. Also, the photoelectric conversion system 2300 includes a parallax acquirer 2314 that calculates a parallax (the phase difference of a parallax image) from the plurality of image data acquired by the photoelectric conversion system 2300. The photoelectric conversion system 2300 also includes a distance measurer 2316 that calculates the distance up to a target object based on the calculated parallax, and a collision determiner 2318 that determines, based on the calculated distance, whether there is collision possibility. Here, the parallax acquirer 2314 or the distance acquirer 2316 is an example of a distance information acquisition means for acquiring distance information up to a target object. That is, the distance information may be acquired using not only the phase difference but also the TOF technique. The collision determiner 2318 may determine collision possibility using one of the pieces of distance information. The distance information acquisition means may be implemented by exclusively designed hardware, or may be implemented by a software module. The distance information acquisition means may be implemented by a Field Programmable Gate Array (FPGA), Application Specific Integrated Circuit (ASIC), or the like. Alternatively, the distance information acquisition means may be implemented by a combination of these.

The photoelectric conversion system 2300 is connected to a vehicle information acquisition device 2320, and can acquire vehicle information such as a vehicle speed, a yaw rate, and a steering angle. The photoelectric conversion system 2300 is also connected to a control ECU 2330 that is a control device (controller) configured to output a control signal for generating a braking force to the vehicle based on the determination result of the collision determiner 2318. Furthermore, the photoelectric conversion system 2300 is connected to an alarm device 2340 that generates an alarm to the driver based on the determination result of the collision determiner 2318. For example, if collision possibility is high as the determination result of the collision determiner 2318, the control ECU 2330 performs braking, releasing the accelerator pedal, or suppressing the engine output, thereby controlling the vehicle for avoiding collision and reducing damage. The alarm device 2340 sounds an alarm, displays alarm information on the screen of a car navigation system or the like, or applies a vibration to the seat belt or a steering wheel, thereby making an alarm to the user.

In this application example, the periphery of the vehicle, for example, the front or rear side can be captured by the photoelectric conversion system 2300. Fig. 15B exemplifies the photoelectric conversion system arranged to capture the front side (image capturing range 2350) of the vehicle. The vehicle information acquisition device 2320 sends an instruction to the photoelectric conversion system 2300 or the image capturing device 2310. With this configuration, it is possible to further improve the accuracy of distance measurement.

An example in which control is executed so as not to collide with another vehicle has been explained above. The photoelectric conversion system can also be applied to control of performing automated driving following another vehicle or control of performing automated driving without deviating from a lane. Furthermore, the photoelectric conversion system can be applied not only to a vehicle such as a self-vehicle but also to, for example, a moving body (moving apparatus) such as a ship, an airplane, or an industrial robot. In addition, the photoelectric conversion system can be applied not only to a moving body but also to equipment that broadly uses object recognition, such as an intelligent transport system (ITS).

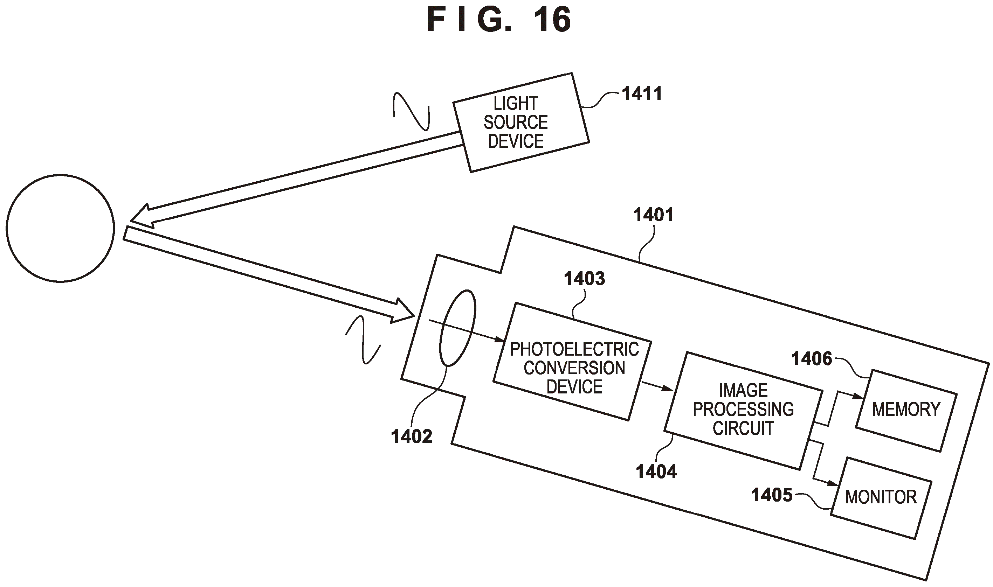

A photoelectric conversion system according to the fourth application example, which is formed as a distance image sensor, will be described with reference to Fig. 16. As exemplified in Fig. 16, a distance image sensor 1401 can be configured to include an optical system 1402, a photoelectric conversion device 1403, an image processing circuit 1404, a monitor 1405, and a memory 1406. The distance image sensor 1401 can receive light (modulated light or pulsed light) projected from a light source device 1411 toward a subject and reflected by the surface of the subject, thereby acquiring a distance image corresponding to the distance up to the subject.

The optical system 1402 is formed by including one or a plurality of lenses, and guides image light (incident light) from the subject to the photoelectric conversion device 1403 and forms an image on the light-receiving surface (sensor portion) of the photoelectric conversion device 1403. As the photoelectric conversion device 1403, the photoelectric conversion device described in the above embodiment is applied, and a distance signal indicating a distance obtained from a light reception signal output from the photoelectric conversion device 1403 is supplied to the image processing circuit 1404.

The image processing circuit 1404 performs image processing of creating a distance image based on the distance signal supplied from the photoelectric conversion device 1403. Then, the distance image (image data) obtained by the image processing is supplied to and displayed on the monitor 1405, or supplied to and stored (recorded) in the memory 1406. The distance image sensor 1401 having such configuration can acquire, for example, a more correct distance image along with improvement in characteristic of pixels by applying the above-described photoelectric conversion device.

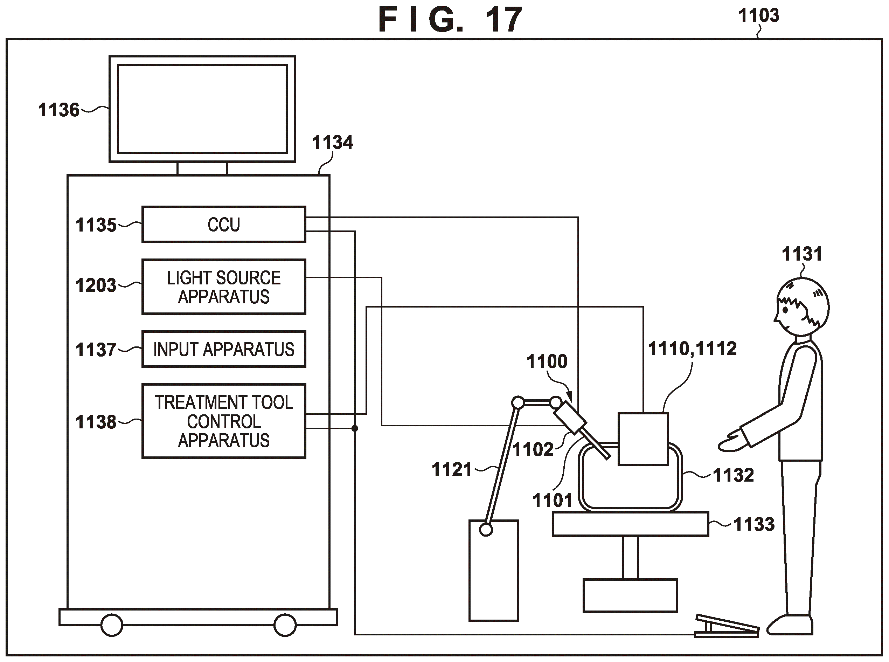

A photoelectric conversion system according to the fifth application example, which is formed as an endoscopic surgery system, will be described with reference to Fig. 17. Fig. 17 shows a state in which an operator (doctor) 1131 operates on a patient 1132 on a patient bed 1133 using an endoscopic surgery system 1103. As shown in Fig. 17, the endoscopic surgery system 1103 is formed from an endoscope 1100, a surgical tool 1110, and a cart 1134 on which various devices for endoscopic surgery are mounted.

The endoscope 1100 includes a lens barrel 1101 including a region of a predetermined length from the distal end, which is inserted into the body cavity of the patient 1132, and a camera head 1102 connected to the proximal end of the lens barrel 1101. In the example shown in Fig. 17, the endoscope 1100 formed as a so-called hard mirror including the hard lens barrel 1101 is shown but the endoscope 1100 may be formed as a so-called soft mirror including a soft lens barrel.

An opening in which an objective lens is fitted is provided at the distal end of the lens barrel 1101. A light source device 1203 is connected to the endoscope 1100, and light generated by the light source device 1203 is guided to the distal end of the lens barrel 1101 by a light guide extended inside the lens barrel 1101, and is emitted to an observation target in the body cavity of the patient 1132 via the objective lens. Note that the endoscope 1100 may be a forward-viewing endoscope or may be a forward-oblique viewing endoscope or side-viewing endoscope.

An optical system and a photoelectric conversion device are provided in the camera head 1102, and reflected light (observation light) from the observation target is condensed by the optical system to the photoelectric conversion device. The observation light is photoelectrically converted by the photoelectric conversion device to generate an electrical signal corresponding to the observation light, that is, an image signal corresponding to an observation image. As the photoelectric conversion device, the photoelectric conversion device described in any one of the above embodiments can be used. The image signal is transmitted as RAW data to a Camera Control Unit (CCU) 1135.

The CCU 1135 is formed by a Central Processing Unit (CPU), a Graphics Processing Unit (GPU), and the like, and comprehensively controls the operations of the endoscope 1100 and a display device 1136. Furthermore, the CCU 1135 receives an image signal from the camera head 1102, and performs, for the image signal, various kinds of image processes such as development processing (demosaic processing) for displaying an image based on the image signal.

Under the control of the CCU 1135, the display device 1136 displays the image based on the image signal having undergone the image processing by the CCU 1135. The light source device 1203 is formed from a light source such as a Light Emitting Diode (LED), and supplies, to the endoscope 1100, irradiation light at the time of imaging an operation portion or the like. An input device 1137 is an input interface to the endoscopic surgery system 1103. The user can input various kinds of information or instructions to the endoscopic surgery system 1103 via the input device 1137. A treatment tool control device 1138 controls driving of an energy treatment tool 1112 for ablation or incision of the tissue, sealing of a blood vessel, or the like.

The light source device 1203 that supplies, to the endoscope 1100, irradiation light at the time of imaging an operation portion can be formed from, for example, a white light source formed by an LED, a laser light source, or a combination thereof. If the white light source is formed by a combination of RGB laser light sources, it is possible to accurately control the output intensity and output timing of each color (each wavelength), and thus the light source device 1203 can adjust the white balance of a captured image. In this case, the observation target is time-divisionally irradiated with laser beams from the RGB laser light sources, respectively, and driving of the image sensor of the camera head 1102 is controlled in synchronism with the irradiation timings, thereby making it possible to time-divisionally capture images respectively corresponding to R, G, and B. In this method, it is possible to obtain a color image without providing color filters in the image sensor.

Driving of the light source device 1203 may be controlled to change the intensity of light to be output for every predetermined time. It is possible to time-divisionally acquire images by controlling driving of the image sensor of the camera head 1102 in synchronism with the timing of changing the intensity of the light, and combine the images, thereby generating an image of a high dynamic range without so-called shadow detail loss or highlight detail loss.

The light source device 1203 may be configured to supply light in a predetermined wavelength band corresponding to special light observation. In special light observation, for example, the wavelength dependency of light absorption in the body tissue is used. More specifically, by performing irradiation with light in a narrow band, as compared with irradiation light (that is, white light) at the time of normal observation, predetermined tissue such as a blood vessel in the mucous membrane surface layer is captured with high contrast. Alternatively, in special light observation, fluorescence observation for obtaining an image by using fluorescence generated by performing radiation with excitation light may be performed. In fluorescence observation, it is possible to, for example, irradiate body tissue with excitation light and observe fluorescence from the body tissue, or locally inject a reagent such as indocyanine green (ICG) to body tissue while irradiating the body tissue with excitation light corresponding to the fluorescence wavelength of the reagent, thereby obtaining a fluorescence image. The light source device 1203 can be configured to supply narrow band light and/or excitation light corresponding to such special light observation.

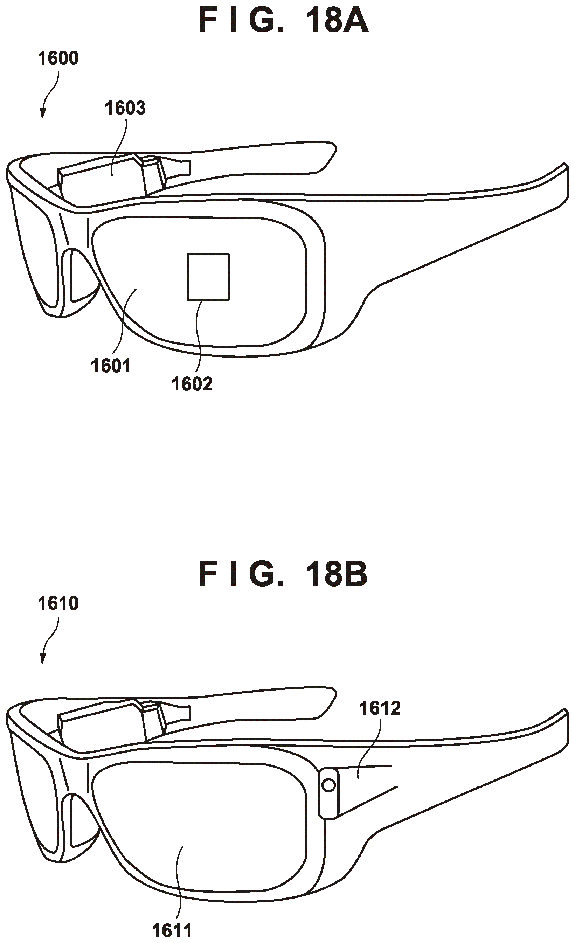

A photoelectric conversion system according to the sixth application example, which is formed as smartglasses, will be described with reference to Figs. 18A and 18B. Fig. 18A is a view showing an example of glasses 1600 (smartglasses) as the photoelectric conversion system. The glasses 1600 include a photoelectric conversion device 1602. The photoelectric conversion device 1602 is the photoelectric conversion device described in any one of the above embodiments. A display device including the light emitting device such as an OLED or LED may be provided on the back surface side of a lens 1601. One or a plurality of photoelectric conversion devices 1602 may be provided. Alternatively, a plurality of kinds of photoelectric conversion devices may be used in combination. The arrangement position of the photoelectric conversion device 1602 is not limited to that shown in Fig. 18A.

The glasses 1600 further include a control device 1603. The control device 1603 functions as a power supply that supplies electric power to the photoelectric conversion device 1602 and the above-described display device. In addition, the control device 1603 controls the operations of the photoelectric conversion device 1602 and the display device. An optical system configured to condense light to the photoelectric conversion device 1602 is formed on the lens 1601.

Fig. 18B describes glasses 1610 (smartglasses) according to another configuration example. The glasses 1610 include a control device 1612, and a photoelectric conversion device corresponding to the photoelectric conversion device 1602 and a display device are mounted on the control device 1612. The photoelectric conversion device in the control device 1612 and an optical system configured to project light emitted from the display device are formed in a lens 1611, and an image is projected to the lens 1611. The control device 1612 functions as a power supply that supplies electric power to the photoelectric conversion device and the display device, and controls the operations of the photoelectric conversion device and the display device. The control device may include a line-of-sight detector that detects the line of sight of a wearer. The detection of a line of sight may be done using infrared rays. An infrared ray emitter emits infrared rays to an eyeball of the user who is gazing at a displayed image. An image capturing unit including a light receiving element detects reflected light of the emitted infrared rays from the eyeball, thereby obtaining a captured image of the eyeball. A reducer for reducing light from the infrared ray emitter to the display unit in a plan view is provided, thereby reducing deterioration of image quality.

The line of sight of the user to the displayed image is detected from the captured image of the eyeball obtained by capturing the infrared rays. An arbitrary known method can be applied to the line-of-sight detection using the captured image of the eyeball. As an example, a line-of-sight detection method based on a Purkinje image obtained by reflection of irradiation light by a cornea can be used. More specifically, line-of-sight detection processing based on pupil center corneal reflection is performed. Using pupil center corneal reflection, a line-of-sight vector representing the direction (rotation angle) of the eyeball is calculated based on the image of the pupil and the Purkinje image included in the captured image of the eyeball, thereby detecting the line-of-sight of the user.

The display device according to this embodiment can include a photoelectric conversion device including a light receiving element, and control a displayed image of the display device based on the line-of-sight information of the user from the photoelectric conversion device. More specifically, the display device decides a first visual field region at which the user is gazing and a second visual field region other than the first visual field region based on the line-of-sight information. The first visual field region and the second visual field region may be decided by the control device of the display device, or those decided by an external control device may be received. In the display region of the display device, the display resolution of the first visual field region may be controlled to be higher than the display resolution of the second visual field region. That is, the resolution of the second visual field region may be lower than that of the first visual field region.

In addition, the display region includes a first display region and a second display region different from the first display region, and a region of higher priority may be decided from the first display region and the second display region based on line-of-sight information. The first visual field region and the second visual field region may be decided by the control device of the display device, or those decided by an external control device may be received. The resolution of the region of higher priority may be controlled to be higher than the resolution of the region other than the region of higher priority. That is, the resolution of the region of relatively low priority may be low.

Note that AI may be used to decide the first visual field region or the region of higher priority. The AI may be a model configured to estimate the angle of the line of sight and the distance to a target object ahead the line of sight from the image of the eyeball using the image of the eyeball and the direction of actual viewing of the eyeball in the image as supervised data. The AI program may be held by the display device, the photoelectric conversion device, or an external device. If the external device holds the AI program, it is transmitted to the display device via communication.

When performing display control based on line-of-sight detection, smartglasses further including a photoelectric conversion device configured to capture the image of the outside can preferably be applied. The smartglasses can display the captured outside image information in real time.

Various embodiments have been described in detail above but it will be understood that the present disclosure is not limited to these embodiments and encompasses all modifications, variants, alternatives and equivalents falling within the scope of the appended claims.

## Claims

1. A photoelectric conversion device comprising a pixel array including a plurality of pixels, a readout circuit configured to read out a signal from the pixel array, and a timing controller,
wherein the timing controller defines a plurality of sub-frame periods forming each frame period and a plurality of detection periods forming each sub-frame period,
each of the plurality of pixels includes a detector configured to detect a photon, and an integrator configured to, in each of the plurality of sub-frame periods, add, to an integrated value, a weight value according to a detection period in which a photon is detected by the detector among the plurality of detection periods, and
the timing controller sets the weight value in accordance with a gain by which a processor configured to process a signal output from the readout circuit multiplies the signal.

2. The device according to claim 1, wherein
in a case where the gain is smaller than a threshold, the timing controller sets the weight value to a value larger than 1.

3. The device according to claim 2, wherein
in a case where the gain is larger than the threshold, the timing controller sets the weight value to 1.

4. The device according to claim 2 or 3, further comprising a programming unit configured to program the threshold.

5. The device according to claim 1, wherein
in a case where the gain is smaller than a first threshold and the gain is larger than a second threshold larger than the first threshold, the timing controller sets the weight value to a value larger than 1.

6. The device according to claim 5, wherein
in a case where the gain is larger than the first threshold and smaller than the second threshold, the timing controller sets the weight value to 1.

7. The device according to any one of claims 1 to 6, further comprising a gain setter configured to set the gain,
wherein the timing controller sets the weight value in accordance with the gain set by the gain setter.

8. The device according to claim 7, further comprising a sensitivity setter configured to set an ISO sensitivity,
wherein the gain setter sets the gain in accordance with the ISO sensitivity set by the sensitivity setter.

9. The device according to any one of claims 1 to 6, further comprising the processor and a gain setter configured to set the gain,
wherein the timing controller sets the weight value in accordance with the gain set by the gain setter.

10. The device according to any one of claims 1 to 9, wherein
the timing controller generates a plurality of pulse signals that define the plurality of detection periods.

11. The device according to claim 10, wherein
the integrator includes a counter, and a counter controller configured to control the counter, and
the counter controller causes the counter to perform a count operation, in each sub-frame period, in accordance with a pulse signal after a photon is detected by the detector among the plurality of pulse signals.

12. The device according to claim 11, wherein
in each sub-frame period, intervals between the plurality of pulse signals are non-equal intervals.

13. The device according to any one of claims 1 to 12, wherein
the detector includes an avalanche photodiode.

14. A photoelectric conversion system comprising:
a photoelectric conversion device defined in any one of claims 1 to 13; and
an image processing circuit configured to generate an image using a signal output from the photoelectric conversion device.

15. A moving body including a photoelectric conversion device defined in any one of claims 1 to 14, comprising
a timing controller configured to control movement of the moving body using a signal output from the photoelectric conversion device.
